# EUROPEAN PATENT SPECIFICATION

(11) **EP 0 967 883 B1**
(45) Date of publication and mention of the grant of the patent: **24.09.2003**
(21) Application number: 96945948.6
(22) Date of filing: 23.12.1996
(51) Int. Cl.: A23G 3/30

(54) **CHEWING GUM COMPOSITION CONTAINING SODIUM GLYCINATE**
KAUGUMMIZUSAMMENSETZUNG ENTHALTEND NATRIUMGLYCINAT
COMPOSITION POUR GOMME A MACHER CONTENANT DU GLYCINATE DE SODIUM

(30) Priority: 27.11.1996 WO PCT/US96/18977
(43) Date of publication of application: 05.01.2000
(73) Proprietor: WM. WRIGLEY JR. COMPANY, Chicago Illinois 60611 (US)
(72) Inventor: TYRPIN, Henry, T., Palos Park, IL 60464 (US); WOLF, Fred, R., Naperville, IL 60540 (US)
(74) Representative: Rickard, David John
(86) International application number: US9620329
(87) International publication number: WO98023167

(56) References cited:
- WO-A-96/15768
- US-A- 4 251 548
- US-A- 4 822 597
- US-A- 5 192 563
- US-A- 5 372 824
- US-A- 5 389 360
- US-A- 5 523 105

## Description

### BACKGROUND OF THE INVENTION

The present invention relates to methods for producing chewing gum. More particularly the invention relates to producing chewing gum containing sodium glycinate, which has been discovered to be a bitterness inhibitor.

Chewing gum compositions often contain ingredients that impart a bitter taste to the chewing gum. Caffeine gives a bitter taste when used in gum. Some typical chewing gum flavoring agents, such as menthol, spearmint oil and peppermint oil, give a bitter taste. Medicants sometimes added to chewing gum also give a bitter taste to the gum.

There are many known bitterness inhibitors, and many of them have been suggested for use in chewing gum, such as those disclosed in U.S. Patents No. 4,822,597 and No. 5,192,563, and Japanese Patent Publication No. 91-251533. Also, the use of flavoring ingredients which have been modified to reduce bitterness have been used in chewing gum, such as disclosed in U.S. Patents No. 5,009,893; No. 5,372,824 and No. 5,523,105. Still there is a need for a better bitterness inhibitor which can be used in chewing gum to reduce the bitterness of the taste of some chewing gums.

### SUMMARY OF THE INVENTION

The present invention comprises, in a first aspect, a chewing gum composition comprising from 5% to 95% gum base; from 5% to 95% bulking and sweetening agents; from 0.1% to 15% flavor; and from 0.02% to 5% sodium glycinate.

In another aspect, the present invention comprises a method of making a chewing gum product with reduced bitterness comprising the steps of mixing from 5% to 95% gum base, from 5% to 95% bulking and sweetening agents, and from 0.1% to 15% flavor to form a chewing gum composition, the chewing gum including an ingredient which gives the chewing gum composition a bitter taste; while making the gum composition, adding sodium glycinate in an amount sufficient to provide the gum composition with suppressed bitterness.

The present invention also comprises a chewing gum product comprising the chewing gum composition as defined above.

Chewing gum made with sodium glycinate gives a flavor that is less harsh and less bitter. This sodium salt seems to have a greater impact on reducing bitterness than other sodium salts. At levels of 0.02% to 5%, sodium glycinate has been found to act as a bitterness inhibitor without imparting a salty taste.

In addition, it has been discovered that sodium glycinate acts as a gum softener during early and intermediate chew stages. Lower levels are better to inhibit bitterness and higher levels give softener gum.

### DETAILED DESCRIPTION OF THE PRESENTLY PREFERRED EMBODIMENTS

As used herein, the term "chewing gum" also includes bubble gum and the like. All percentages are weight percentages unless otherwise specified.

Sodium glycinate is made by reacting glycine with sodium hydroxide to form the salt. A purified food grade sample of sodium glycinate was obtained from Seltzer Chemicals, Inc. 5927 Gerger Court, Carlsbad, California. Since other sodium salts have been found to reduce bitterness in food products, and since glycine is an aminoacetic acid and is a sweet protein, it was speculated that sodium glycinate may have some unique properties for bitterness reduction. Sodium glycinate has been used in pharmaceuticals and some dentifrices, but has found only limited use in food products such as meats. Its use in food and pharmaceuticals is generally related to it being an alkalinizer. It has been discovered that when sodium glycinate is added to chewing gum at levels of 0.02% to 5%, preferably 0.05% to 2%, and most preferably 0.1% to 1%, the product has an improved flavor quality and a softer texture. This sodium salt improves flavor by reducing bitterness of the flavor ingredients such as menthol and physiological cooling agents. If bitter stimulants or pharmaceuticals such as caffeine were used in the gum, sodium glycinate would also reduce this bitterness.

Like mono-sodium glutamate (MSG), which is also a sodium salt of an aminocarboxylic acid, sodium glycinate has an effect on taste properties. However, unlike sodium glutamate, which has its own characteristic taste qualities, sodium glycinate is more bland in taste. This bland taste allows it to be used at higher levels in chewing gum without effecting overall gum flavor quality.

Sensory tests also suggested that sodium glycinate may act as a gum softener. When used at the levels indicated above, sodium glycinate gives a softer gum product and acts like an emulsifier to effect the overall texture of gum.

There may be advantages of having the rate of release of the sodium glycinate from chewing gum modified. For example, if sodium glycinate is added to chewing gum to reduce the bitterness of an ingredient which releases slowly from chewing gum, then the sodium glycinate may preferably be treated to delay its release from the chewing gum. Alternatively, there may be instances in which the release rate would preferably be increased.

Not only would a delayed release of the bitterness inhibitor be effective for caffeine, and bitter medicaments but also when used with high menthol type gum flavors. Menthol is a common ingredient in peppermint flavor that causes a bitterness in gum in the later stages of chewing. A delayed release bitterness inhibitor can reduce this flavor bitterness in the later stages.

The release rate of the bitterness inhibitor should be designed to release with the ingredient for which it is masking bitterness, whether it be a flavor, a stimulant like caffeine, or a medicant. In some instances, the bitterness inhibitor may be co-encapsulated with the bitter causing agent to release together during the chewing period. If desired, high intensity sweeteners may be added to this mixture to further reduce bitterness and obtain an acceptable product.

The bitterness inhibitor can be added to chewing gum as a powder, as an aqueous dispersion, or dispersed in glycerin, propylene glycol, corn syrup, hydrogenated starch hydrolyzate, or any other compatible aqueous dispersion.

For aqueous dispersions, an emulsifier can also be mixed in the solution with the bitterness inhibitor and the mixture added to a chewing gum. A flavor can also be added to the bitterness inhibitor/emulsifier mixture. The emulsion formed can be added to chewing gum. The bitterness inhibitor in powder form may also be mixed into a molten chewing gum base during base manufacture or prior to manufacture of the gum. The bitterness inhibitor may also be mixed with base ingredients during base manufacture.

As stated previously, physical modifications of the bitterness inhibitor by encapsulation with highly water soluble substrates will increase its release in chewing gum by increasing the solubility or dissolution rate. Any standard technique which gives partial or full encapsulation can be used. These techniques include, but are not limited to, spray drying, spray chilling, fluid-bed coating and coacervation. These encapsulation techniques may be used individually in a single step process or in any combination in a multiple step process. The preferred technique for fast release of the bitterness inhibitor is spray drying.

The bitterness inhibitor may also be encapsulated or entrapped to give a delayed release from chewing gum. A slow, even release can give a reduced bitterness over a long period of time and blend more easily with longer lasting flavors and sweeteners. The bitterness inhibitor may be encapsulated with sweeteners, specifically high-intensity sweeteners such as thaumatin, dihydrochalcones, acesulfame K, aspartame, sucralose, alitame, saccharin and cyclamates.

The encapsulation techniques described herein are standard coating techniques and generally give varying degrees of coating from partial to full coating, depending on the coating composition used in the process. Generally, compositions that have high organic solubility, good film-forming properties and low water solubility give better delayed release, while compositions that have high water solubility give better fast release. Such low water-solubility compositions include acrylic polymers and copolymers, carboxyvinyl polymer, polyamides, polystyrene, polyvinyl acetate, polyvinyl acetate phthalate, polyvinylpyrrolidone and waxes. Although all of these materials.are possible for encapsulation of the bitterness inhibitor, only food-grade materials should be considered. Two standard food-grade coating materials that are good film formers but not water soluble are shellac and Zein. Others which are more water soluble, but good film formers, are materials like agar, alginates, a wide range of cellulose derivatives like ethyl cellulose, methyl cellulose, sodium hydroxymethyl cellulose, and hydroxypropylmethyl cellulose, dextrin, gelatin, and modified starches. These ingredients, which are-generally approved for food use, may give a fast release when used as an encapsulant for the bitterness inhibitor. Other encapsulants like acacia or maltodextrin can also encapsulate the bitterness inhibitor and give a fast release rate from gum.

The amount of coating or encapsulating material on the bitterness inhibitor may also control the length of time for its release from chewing gum. Generally, the higher the level of coating and the lower the amount of active bitterness inhibitor, the slower the release during mastication with low water soluble compositions. The release rate is generally not instantaneous, but gradual over an extended period of time. To obtain the delayed release to blend with a gum's flavor release, the encapsulant should be a minimum of about 20% of the coated bitterness inhibitor. Preferably, the encapsulant should be a minimum of about 30% of the coated bitterness inhibitor, and most preferably should be a minimum of about 40% of the coated bitterness inhibitor. Depending on the coating material, a higher or lower amount of coating material may be needed to give the desired release.

Another method of giving a modified release of the bitterness inhibitor is agglomeration with an agglomerating agent which partially coats the bitterness inhibitor. This method includes the step of mixing the bitterness inhibitor and an agglomerating agent with a small amount of water or other solvent. The mixture is prepared in such a way as to have individual wet particles in contact with each other so that a partial coating can be applied. After the water or solvent is removed, the mixture is ground and used as a powdered, coated bitterness inhibitor.

Materials that can be used as the agglomerating agent are the same as those used in encapsulation mentioned previously. However, since the coating is only a partial encapsulation, some agglomerating agents are more effective in increasing the bitterness inhibitor's release than others. Some of the better agglomerating agents for delayed release are the organic polymers like acrylic polymers and copolymers, polyvinyl acetate, polyvinylpyrrolidone, waxes, shellac and Zein. Other agglomerating agents are not as effective in giving a delayed release as are the polymers, waxes, shellac and Zein, but can be used to give some delayed release. Other agglomerating agents that give a fast release include, but are not limited to, agar, alginates, a wide range of water soluble cellulose derivatives like ethyl-cellulose, methyl cellulose, sodium hydroxymethyl cellulose, hydroxypropylmethyl cellulose, dextrin, gelatin, modified starches, and vegetable gums like guar gum, locust bean gum and carrageenan. Even though the agglomerated bitterness inhibitor is only partially coated, when the quantity of coating is increased compared to the quantity of bitterness inhibitor, the release of bitterness inhibitor can also be modified for mastication. The level of coating used in the agglomerated product is a minimum of 5%. Preferably, the coating level is a minimum of 15% and more preferably about 20%. Depending on the agglomerating agent, a higher or lower amount of agent may be needed to give the desired release of bitterness inhibitor.

The bitterness inhibitor may be coated in a two-step process or a multiple step process. The bitterness inhibitor may be encapsulated with any of the materials as described previously and then the encapsulated bitterness inhibitor can be agglomerated as previously described to obtain an encapsulated/agglomerated/bitterness inhibitor product that could be used in chewing gum to give a delayed release of the 5 bitterness inhibitor.

In another embodiment of this invention, the bitterness inhibitor may be absorbed onto another component which is porous and becomes entrapped in the matrix of the porous component. Common materials used for absorbing the bitterness inhibitor include, but are not limited to, silicas, silicates, pharmasorb clay, spongelike beads or microbeads, amorphous carbonates and hydroxides, including aluminum and calcium lakes, all of which result in a delayed release of the bitterness inhibitor. Other water soluble materials including amorphous sugars such as spray-dried dextrose, sucrose, alditols and vegetable gums and other spray-dried materials result in a faster release of the bitterness inhibitor.

Depending on the type of absorbent materials and how it is prepared, the amount of the bitterness inhibitor that can be loaded onto the absorbent will vary. Generally materials like polymers or spongelike beads or microbeads, amorphous sugars and alditols and amorphous carbonates and hydroxides absorb 10% to 40% of the weight of the absorbent. Other materials like silicas and pharmasorb clays may be able to absorb 20% to 80% of the weight of the absorbent.

The general procedure for absorbing a bitterness inhibitor onto the absorbent is as follows. An absorbent like fumed silica powder can be mixed in a powder blender and an aqueous solution of a bitterness inhibitor can be sprayed onto the powder as mixing continues. The aqueous solution can be 10% to 30% solids, and higher solid levels may be used if temperatures up to 90°C are used. Generally water is the solvent, but other solvents like alcohol could also be used if approved for use in food. As the powder mixes, the liquid is sprayed onto the powder. Spraying is stopped before the mix becomes damp. The still free-flowing powder is removed from the mixer and dried to remove the water or other solvent, and is then ground to a specific particle size.

After the bitterness inhibitor is absorbed or fixed onto an absorbent, the fixative/inhibitor can be coated by encapsulation. Either full or partial encapsulation may be used, depending on the coating composition used in the process. Full encapsulation may be obtained by coating with a polymer as in spray drying, spray chilling, fluid-bed coating, coacervation, or any other standard technique. A partial encapsulation or coating can be obtained by agglomeration of the fixative inhibitor mixture using any of the materials discussed above.

Another form of encapsulation is by entrapment of an ingredient by fiber extrusion or fiber spinning into a polymer. Polymers that can be used for extrusion are PVAC, hydroxypropyl cellulose, polyethylene and other types of plastic polymers. A process of encapsulation by fiber extrusion is disclosed in U.S. Patent No. 4,978,537, which is hereby incorporated by reference. The water insoluble polymer may be preblended with the bitterness inhibitor prior to fiber extrusion, or may be added after the polymer is melted. As the extrudate is extruded, it results in small fibers that are cooled and ground. This type of encapsulation/entrapment generally gives a very long, delayed release of an active ingredient.

The four primary methods to obtain a modified release of the bitterness inhibitor are: (1) encapsulation by spray drying, fluid-bed coating, spray chilling and coacervation to give full or partial encapsulation, (2) agglomeration to give partial encapsulation,
(3) fixation or absorption which also gives partial encapsulation, and (4) entrapment into an extruded compound. These four methods, combined in any usable manner which physically modifies the release or dissolvability of the bitterness inhibitor, are included in this invention.

A method of modifying the release rate of the bitterness inhibitor from the chewing gum is to add the bitterness inhibitor to the dusting compound of a chewing gum. A rolling or dusting compound may be applied to the surface of chewing gum as it is formed. This rolling or dusting compound serves to reduce sticking of the chewing gum product to machinery as it is formed and as it is wrapped, and sticking of the product to its wrapper after it is wrapped and is being stored. The rolling compound comprises a bitterness inhibitor powder in combination with mannitol, sorbitol, sucrose, starch, calcium carbonate, talc, other orally acceptable substances or a combination thereof. The rolling compound constitutes from 0.25% to 10%, but preferably 1% to 3% by weight of the chewing gum composition. The amount of a bitterness inhibitor powder added to the rolling compound is 0.05% to 20% of the rolling compound or 5 ppm to 2000 ppm of the chewing gum composition. This method of using a bitterness inhibitor powder in the chewing gum allows for a lower usage level of the bitterness inhibitor, gives a bitterness inhibitor a fast release rate, reduces bitterness and reduces or eliminates any possible reaction with gum base, flavor components, or 'other components, yielding improved shelf stability.

Another method of modifying the release rate of a bitterness inhibitor is to use it in the coating/panning of a pellet chewing gum. Pellet or ball gum is prepared as conventional chewing gum, but formed into pellets that are pillow shaped or into balls. The pellets/balls can then be sugar coated or panned by conventional panning techniques to make a unique sugar coated pellet gum. The bitterness inhibitor may generally be very stable and highly water soluble and can be easily dispersed in a sugar solution prepared for sugar panning. The bitterness inhibitor can also be added as a powder blended with other powders often used in some types of conventional panning procedures. Using the bitterness inhibitor in a coating isolates it from other gum ingredients and modifies its release rate in chewing gum. Levels of the bitterness inhibitor may be 100 ppm (0.01%) to 25,000 ppm (2.5%) in the coating and 50 ppm (0.005%) to 10,000 ppm (1%) of the weight of the chewing gum product. The weight of the coating may be 20% to 50% of the weight of the finished gum product.

Conventional panning procedures generally coat with sucrose, but recent advances in panning have allowed the use of other carbohydrate materials to be used in the place of sucrose. Some of these components include, but are not limited to, dextrose, maltose, palatinose, xylitol, lactitol, hydrogenated isomaltulose and other new alditols or a combination thereof. These materials may be blended with panning modifiers including, but not limited to, gum arabic, maltodextrins, corn syrup, gelatin, cellulose type materials like carboxymethyl cellulose or hydroxymethyl cellulose, starch and modified starches, vegetable gums like alginates, locust bean gum, guar gum, and gum tragacanth, insoluble carbonates like calcium carbonate or magnesium carbonate and talc. Antitack agents may also be added as panning modifiers which allow for the use of a variety of carbohydrates and sugar alcohols in the development of new panned or coated gum products. Flavors may also be added with the sugar coating and with the bitterness inhibitor to yield unique product characteristics.

Another type of pan coating would also modify the release rate of the bitterness inhibitor from the chewing gum. This technique is referred to as film coating and is more common in pharmaceuticals than in chewing gum, but procedures are similar. A film like shellac, Zein, or cellulose-type material is applied onto a pellet-type product forming a thin film on the surface of the product. The film is applied by mixing the polymer, a plasticizer and a solvent (pigments are optional) and spraying the mixture onto the pellet surface. This is done in conventional type panning equipment, or in more advanced side-vented coating pans. When a solvent like alcohol is used, extra precautions are needed to prevent fires and explosions, and specialized equipment must be used.

Some film polymers can use water as the solvent in film coating. Recent advances in polymer research and in film coating technology eliminates the problem associated with the use of flammable solvents in coating. These advances make it possible to apply aqueous films to a pellet or chewing gum product. Since the bitterness inhibitor is highly water soluble, it may be added to this aqueous film solution and applied with the film to the pellet or chewing gum product. The aqueous film, or even the alcohol solvent film, in which the bitterness inhibitor is dispersed may also contain a flavor along with the polymer and plasticizer.

The previously described encapsulated, agglomerated or absorbed sodium glycinate, or sodium glycinate in a powder or solution form, may readily be incorporated into a chewing gum composition. The remainder of the chewing gum ingredients are noncritical to the present invention. That is, the bitterness inhibitor can be incorporated into . conventional chewing gum formulations in a conventional manner. The sodium glycinate may be used in a sugar chewing gum or a sugarless chewing gum. The bitterness inhibitor may be used in either regular chewing gum or bubble gum.

In general, a chewing gum composition typically comprises a water-soluble bulk portion, a water-insoluble chewable gum base portion and typically water-insoluble flavoring agents. The water-soluble portion dissipates with a portion of the flavoring agent over a period of time during chewing. The gum base portion is retained in the mouth throughout the chew.

The insoluble gum base generally comprises elastomers, resins, fats and oils, waxes, softeners and inorganic fillers. Elastomers may include polyisobutylene, isobutylene-isoprene copolymer and styrene butadiene rubber, as well as natural latexes such as chicle. Resins include polyvinylacetate and terpene resins. Fats and oils may also be included in the gum base, including tallow, hydrogenated and partially hydrogenated vegetable oils, and cocoa butter. Commonly employed waxes include paraffin, microcrystalline and natural waxes such as beeswax and carnauba. According to the preferred embodiment of the present invention, the insoluble gum base constitutes between 5% and 95% by weight of the gum. More preferably the insoluble gum base constitutes between 10% and 50% by weight of the gum, and most preferably between 20% and 35% by weight of the gum.

The gum base typically also includes a filler component. The filler component may be calcium carbonate, magnesium carbonate, talc, dicalcium phosphate or the like. The filler may constitute between 5% and 60% by weight of the gum base. Preferably, the filler constitutes 5% to 50% by weight of the gum base.

Gum bases typically also contain softeners, including glycerol monostearate and glycerol triacetate. Further, gum bases may also contain optional ingredients such as antioxidants, colors, and emulsifiers. The present invention contemplates employing any commercially acceptable gum base.

The water-soluble portion of the chewing gum may further comprise softeners, sweeteners, flavoring agents and combinations thereof. Softeners are added to the chewing gum in order to optimize the chewability and mouth feel of the gum. Softeners, also known in the art as plasticizers or plasticizing agents, generally constitute between 0.5% and 15% by weight of the chewing gum. Softeners contemplated by the present invention include glycerin, lecithin and combinations thereof. Further, aqueous sweetener solutions such as those containing sorbitol, hydrogenated starch hydrolyzates, corn syrup and combinations thereof may be used as softeners and binding agents in gum.

As mentioned above, the sodium glycinate bitterness inhibitor of the present invention may be used in sugar or sugarless gum formulations, although sugar gum formulations are presently preferred. Sugar sweeteners generally include saccharide-containing components commonly known in the chewing gum art which comprise, but are not limited to, sucrose, dextrose, maltose, dextrin, dried invert sugar, fructose, levulose, galactose, corn syrup solids and the like, alone or in any combination. Sugarless sweeteners include components with sweetening characteristics but which are devoid of the commonly known sugars and comprise, but are not limited to, sugar alcohols such as sorbitol, mannitol, xylitol, hydrogenated starch hydrolyzates, maltitol and the like, alone or in any combination.

Depending on the particular bitterness inhibitor release profile and shelf-stability needed, the sodium glycinate bitterness inhibitor of the present invention can also be used in combination with uncoated high-potency sweeteners or with high-potency sweeteners coated with other materials and by other techniques.

A flavoring agent is also be present in the chewing gum in an amount within the range of from 0.1% to 15%, preferably from 0.5% to 3%, by weight of the gum. The flavoring agents may comprise essential oils, synthetic flavors, or mixtures thereof including, but not limited to oils derived from plants and fruits such as citrus oils, fruit essences, peppermint oil, spearmint oil, clove oil, oil of wintergreen, anise, and the like. Artificial flavoring components are also contemplated for use in gums of the present invention. Those skilled in the art will recognize that natural and artificial flavoring agents may be combined in any sensorally acceptable blend. All such flavors and flavor blends are contemplated by the present invention.

Optional ingredients such as colors, emulsifiers and pharmaceutical agents may be added to the chewing gum.

In general, chewing gum is manufactured by sequentially adding the various chewing gum ingredients to a commercially available mixer known in the art. After the ingredients have been thoroughly mixed, the gum mass is discharged from the mixer and shaped into the desired form such as by rolling into sheets and cutting into sticks, extruding into chunks or casting into pellets.

Generally, the ingredients are mixed by first melting the gum base and adding it to the running mixer. The base may also be melted in the mixer itself. Color or emulsifiers may also be added at this time. A softener such as glycerin may also be added at this time, along with syrup and a portion of the bulking agent. Further portions of the bulking agent may then be added to the mixer. A flavoring agent is typically added with the final portion of the bulking agent. The coated bitterness inhibitor of the present invention is preferably added after the final portion of bulking agent and flavor have been added.

The entire mixing procedure typically takes from five to fifteen minutes, but longer mixing times may sometimes be required. Those skilled in the art will recognize that many variations of the above described procedure may be followed.

The following examples of the invention and comparative examples are provided by way of explanation and illustration.

Gum was made from the following formulas:

| | **Formula A** | **Formula B** |
|---|---|---|
| Base | 21.2 | 19.1 |
| Sugar | 52.0 | 53.93 |
| Corn Syrup | 12.5 | 12.5 |
| Dextrose . | 9.9 | 9.9 |
| Wintergreen Flavor | 1.4 | 0.9 |
| Encapsulated | 0.9 | 0.8 |
| Wintergreen Flavor | | |
| Encapsulated Menthol | 0.3 | 0.3 |
| Encapsulated High Intensity **Sweeteners** | 0.31 | 0.58 |
| Lecithin | 0.13 | 0.13 |
| Color | 0.06 | 0.06 |
| Glycerin | 1.3 | 1.3 |
| Menthol and Artificial Cooling Agents | -- | 0.5 |
| | 100.00 | 100.00 |

### Examples A and 1-3

### Comparative Example A - Formula A

Example 1 - 0.25% Sodium Glycinate was added to Formula A
-Example 2 - 0.50% Sodium Glycinate was added to Formula A
Example 3 - 1.0% Sodium Glycinate was added to Formula A

Sensory evaluation indicated that the overall bitterness of the gum of Examples 1-3 was significantly reduced compared to Comparative Example A. Also, Examples 2 and 3, with 0.5% and 1.0% sodium glycinate, had a much softer texture than comparative Example A.

### Examples B and 4-5

### Comparative Example B - Formula B

Example 4 - 0.25% Sodium Glycinate was added to Formula B
Example 5 - 0.40% Sodium Glycinate was added to Formula B

Sensory evaluation of Examples 4 and 5 compared to Comparative Example B indicated that all three examples had good high flavor with cooling, but Examples 4 and 5 had much less bitterness.

It should be appreciated that the methods and compositions of the present invention are capable of being incorporated in the form of a variety of embodiments, only a few of which have been illustrated and described above. The invention may be embodied in other forms without departing from its spirit or essential characteristics. It will be appreciated that the addition of some other ingredients, process steps, materials or components not specifically included will have an adverse impact on the present invention. The best mode of the invention may therefore exclude ingredients, process steps, materials or components other than those listed above for inclusion or use in the invention. However, the described embodiments are to be considered in all respects only as illustrative and not restrictive, and the scope of the invention is, therefore, indicated by the appended claims rather than by the foregoing description.

## Claims

1. A chewing gum composition comprising:
from 5% to 95% gum base;
from 5% to 95% bulking and sweetening agents;
from 0.1% to 15% flavor; and
from 0.02% to 5% sodium glycinate.

2. A chewing gum composition as claimed in claim 1 further comprising an ingredient which gives the chewing gum composition a bitter taste.

3. A chewing gum composition as claimed in claim 2 wherein the bitter tasting ingredient is selected from the group consisting of caffeine, peppermint oil, menthol, spearmint oil, oil of wintergreen, physiological cooling agents and medicants.

4. A chewing gum composition as claimed in any one of claims 1 to 3 wherein the sodium glycinate is present at a level of from 0.05 to 2%.

5. A chewing gum composition as claimed in any one of claims 1 to 3 wherein the sodium glycinate is present at a level of from 0.1% to 1%.

6. A chewing gum composition as claimed in any one of claims 1 to 5 wherein the sodium glycinate is treated to modify its rate of release from the chewing gum.

7. A chewing gum composition as claimed in claim 6 wherein the sodium glycinate is treated by encapsulation.

8. A chewing gum composition as claimed in claim 6 wherein the sodium glycinate is treated by agglomeration.

9. A chewing gum composition as claimed in claim 6 wherein the sodium glycinate is treated by fixation.

10. A chewing gum composition as claimed in claim 6 wherein the sodium glycinate is treated by entrapment.

11. A chewing gum composition as claimed in any one of claims 1 to 10 wherein the bulking and sweetening agents comprise sugar and glycose syrup.

12. A chewing gum product comprising the chewing gum composition of any one of claims 1 to 10.

13. A chewing gum product as claimed in claim 12 wherein the sodium glycinate is present in a dusting compound used on the product.

14. A chewing gum product as claimed in claim 12 wherein the sodium glycinate is present in a coating applied to the gum.

15. A method of making a chewing gum product with reduced bitterness comprising the steps of:
mixing from 5% to 95% gum base, from 5% to 95% bulking and sweetening agents, and from 0.1% to 15% flavor to form a chewing gum composition, the chewing gum including an ingredient which gives the chewing gum composition a bitter taste;
while making the gum composition, adding sodium glycinate in an amount sufficient to provide the gum composition with suppressed bitterness.

16. A method as claimed in claim 15 wherein the sodium glycinate is treated so as to modify its release rate from chewing gum before being mixed into the gum composition.

17. A method as claimed in claim 15 or claim 16 wherein the sodium glycinate is present at a level of from 0.02% to 5%

## Patentansprüche

1. , Kaugummi-Zusammensetzung, die umfasst:
5 bis 95 % Kaugummibase,
5. bis 95 % Füll- und Süßungsmittel,
0,1 bis 15 % Geschmacksstoff und
0,02 bis 5 % Natriumglycinat.

2. Kaugummi-Zusammensetzung nach Anspruch 1, die außerdem einen Bestandteil umfasst, der der Kaugummi-Zusammensetzung einen bitteren Geschmack verleiht.

3. Kaugummi-Zusammensetzung nach Anspruch 2, in der der bitter schmeckende Bestandteil ausgewählt ist aus der Gruppe, die besteht aus Koffein, Pfefferminzöl, Menthol, Spearmintöl, Wintergrünöl, physiologischen Kühlungsmitteln und Arzneimitteln.

4. Kaugummi-Zusammensetzung nach einem der Ansprüche 1 bis 3, in der das Natriumglycinat in einer Menge von 0,05 bis 2 % vorliegt.

5. Kaugummi-Zusammensetzung nach einem der Ansprüche 1 bis 3, in der das Natriumglycinat in einer Menge von 0,1 bis 1 % vorliegt.

6. Kaugummi-Zusammensetzung nach einem der Ansprüche 1 bis 5, in der das Natriumglycinat behandelt worden ist, um seine Freisetzungsrate aus dem Kaugummi zu modifizieren.

7. Kaugummi-Zusammensetzung nach Anspruch 6, in der das Natriumglycinat durch Einkapselung behandelt worden ist.

8. Kaugummi-Zusammensetzung nach Anspruch 6, in der das Natriumglycinat durch Agglomeration behandelt worden ist.

9. Kaugummi-Zusammensetzung nach Anspruch 6, in der das Natriumglycinat durch Fixierung behandelt worden ist.

10. Kaugummi-Zusammensetzung nach Anspruch 6, in der das Natriumglycinat durch Einschließen behandelt worden ist.

11. Kaugummi-Zusammensetzung nach einem der Ansprüche 1 bis 10, in der die Füll- und Süßungsmittel Zucker und Glucosesirup umfassen.

12. Kaugummi-Produkt, das die Kaugummi-Zusammensetzung nach einem der Ansprüche 1 bis 10 umfasst.

13. Kaugummi-Produkt nach Anspruch 12, in dem das Natriumglycinat in einer auf dem Produkt verwendeten Bestäubungsverbindung vorliegt.

14. Kaugummi-Produkt nach Anspruch 12, in dem das Natriumglycinat in einem auf den Kaugummi aufgebrachten Überzug vorliegt.

15. Verfahren zur Herstellung eines Kaugummi-Produkts mit einem reduzierten bitteren Geschmack, das die Stufen umfasst:
Vermischen von 5 bis 95 % Kaugummibase, 5 bis 95 % Füll- und Süßungsmitteln und 0,1 bis 15 % Geschmacksstoff zur Bildung einer Kaugummi-Zusammensetzung, wobei der Kaugummi einen Bestandteil enthält, der der Kaugummi-Zusammensetzung einen bitteren Geschmack verleiht;
Zugabe von Natriumglycinat in einer Menge die ausreicht, um der Kaugummi-Zusammensetzung einen unterdrückten bitteren Geschmack zu verleihen, während der Herstellung der Kaugummi-Zusammensetzung.

16. Verfahren nach Anspruch 15, worin das Natriumglycinat behandelt wird, um seine Freisetzungsrate aus dem Kaugummi zu modifizieren, bevor es der Kaugummi-Zusammensetzung zugemischt wird.

17. Verfahren nach Anspruch 15 oder 16, worin das Natriumglycinat in einer Menge von 0,02 bis 5 % vorliegt.

## Revendications

1. Composition de gomme à mâcher comprenant :
5% à 95% d'une base de gomme ;
5% à 95% de charges et d'agents édulcorants ;
0,1% à 15% d'un agent aromatisant ; et
0,02% à 5% de glycinate de sodium.

2. Composition de gomme à mâcher suivant la revendication 1, comprenant en outre un ingrédient qui confère à la composition de gomme à mâcher un goût amer.

3. Composition de gomme à mâcher suivant la revendication 2, dans laquelle l'ingrédient conférant un goût amer est choisi dans le groupe consistant en caféine, en essence de menthe poivrée, en menthol, en essence de menthe verte, en essence de wintergreen, en agents rafraîchissants physiologiques et en agents médicamenteux.

4. Composition de gomme à mâcher suivant l'une quelconque des revendications 1 à 3, dans laquelle le glycinate de sodium est présent en une quantité de 0,05% à 2%.

5. Composition de gomme à mâcher suivant l'une quelconque des revendications 1 à 3, dans laquelle le glycinate de sodium est présent en une quantité de 0,1% à 1%.

6. Composition de gomme à mâcher suivant l'une quelconque des revendications 1 à 5, dans laquelle le glycinate de sodium est traité pour modifier sa vitesse de libération de la gomme à mâcher.

7. Composition de gomme à mâcher suivant la revendication 6, dans laquelle le glycinate de sodium est traité par encapsulation.

8. Composition de gomme à mâcher suivant la revendication 6, dans laquelle le glycinate de sodium est traité par agglomération.

9. Composition de gomme à mâcher suivant la revendication 6, dans laquelle le glycinate de sodium est traité par fixation.

10. Composition de gomme à mâcher suivant la revendication 6, dans laquelle le glycinate de sodium est traité par piégeage.

11. Composition de gomme à mâcher suivant l'une quelconque des revendications 1 à 10, dans laquelle les charges et agents édulcorants comprennent le sucre et le sirop de glucose.

12. Produit consistant en gomme à mâcher comprenant la composition de gomme à mâcher suivant l'une quelconque des revendications 1 à 10.

13. Produit consistant en gomme à mâcher suivant la revendication 12, dans lequel le glycinate de sodium est présent dans un composé de saupoudrage utilisé sur le produit.

14. Produit consistant en gomme à mâcher suivant la revendication 12, dans lequel le glycinate de sodium est présent dans un enrobage appliqué à la gomme.

15. Procédé pour la préparation d'un produit consistant en gomme à mâcher ayant une amertume réduite, comprenant les étapes consistant :
à mélanger 5% à 95% d'une base de gomme, 5% à 95% de charge et d'agents édulcorants, et 0,1% à 15% d'un arôme pour former une composition de gomme à mâcher, la gomme à mâcher comprenant un ingrédient qui confère à la composition de gomme à mâcher un goût amer ;
tout en préparant la composition de gomme, à ajouter du glycinate de sodium en une quantité suffisante pour conférer à la composition de gomme une amertume réduite.

16. Procédé suivant la revendication 15, dans lequel le glycinate de sodium est traité de manière à modifier sa vitesse de libération de la gomme à mâcher avant d'être mélangé à la composition de gomme.

17. Procédé suivant la revendication 15 ou la revendication 16, dans lequel le glycinate de sodium est présent en une quantité de 0,02% à 5%.
